Europäisches Patentamt

European Patent Office

Office européen des brevets

(11) Veröffentlichungsnummer: **0 223 950 B1**

(12) **EUROPÄISCHE PATENTSCHRIFT**

(45) Veröffentlichungstag der Patentschrift: **04.12.91**

(51) Int. Cl.⁵: **A01D 78/10**

(21) Anmeldenummer: **86112743.9**

(22) Anmeldetag: **16.09.86**

(54) **Heuwerbungsmaschine.**

(30) Priorität: **28.11.85 DE 3542139**

(43) Veröffentlichungstag der Anmeldung:
**03.06.87 Patentblatt 87/23**

(45) Bekanntmachung des Hinweises auf die
Patenterteilung:
**04.12.91 Patentblatt 91/49**

(84) Benannte Vertragsstaaten:
**AT CH DE FR GB IT LI NL**

(56) Entgegenhaltungen:
**FR-A- 1 578 007**
**FR-A- 2 157 364**
**US-A- 3 334 911**

(73) Patentinhaber: **GREENLAND GMBH & CO. KG**
**Erwin-Dietrich-Platz 1**
**W-7702 Gottmadingen(DE)**

(72) Erfinder: **Wessel, Ulrich**
**Hilzingerstrasse 33**
**W-7702 Gottmadingen(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung bezieht sich auf eine Heuwerbungsmaschine der im Oberbegriff von Anspruch 1 erläuterten Art.

Eine derartige Heuwerbungsmaschine ist aus der DE-A-22 09 910 in Form eines Kreiselzettwenders bekannt, bei dem der schwenkbare Tragarm der Stützrolle mit einem Handstecker in Bohrungen einer Lochplatte zum Zwecke der Höhenverstellung festlegbar ist. Die Lochplatte selbst ist mit der feststehenden Rechradachse starr verbunden und weist mehrere Bohrungen für verschiedene Höheneinstellungen des Laufrades auf. Der Nachteil dieser Ausführung ist darin zu sehen, daß das Einstellen des Laufrades zeitraubend ist und einen hohen Kraftaufwand benötigt. Mit der einen Hand muß nämlich die Bedienungsperson das auf dem Laufrad ruhende ganze Gewicht der Maschine tragen und mit der anderen Hand muß gleichzeitig der Stecker herausgezogen und in eine neue Bohrung gebracht werden. Ferner sind die innerhalb des Kreisels angeordneten Verstellelemente nur schwer zugänglich.

Aus der US-A-3 334 911 ist weiterhin ein zur Höhenverstellung eines Laufrades drehbarer Exzenter bekannt. Der Exzenter ist jedoch am laufradseitigen Ende eines Tragarms für das Laufrad angeordnet. Der Exzenter greift nicht in eine Öffnung am Tragarm ein sondern enthält Raststifte, die die jeweilige Position des Exzenters festlegen, indem sie durch fest mit dem Tragarm verbundene Öffnungen gesteckt werden. Die Koordination der Verstellbewegungen, Herausziehen der Raststifte und Verdrehen des Exzenters bis exakt in die nächste Rastposition, unter der Wirkung des Maschinengewichts ist äußerst schwierig. Darüberhinaus ist eine stufenlose Verstellung nicht möglich.

Aus dem DE-N-19 86 252 ist eine Höhenverstellvorrichtung für landwirtschaftliche Geräte bekannt, bei der die Laufradnabe drehbar in der Felge gelagert ist und der Geräteträger exzentrisch an der Nabe angelenkt ist. Im Bereich der Nabe ist ein am Geräteträger befestigter Federstecker vorgesehen, der in Bohrungen des Nabenkörpers einrastet. Auch hier hat die Bedienungsperson zur Höhenverstellung die gesamte Maschine anzuheben um den Federstecker zu verstellen.

Ferner ist aus der DE-A-22 50 813 eine Heuwerbungsmaschine bekannt, bei der zwischen dem Tragarm für das Laufrad und der Rechradachse eine Feder angeordnet ist, die so bemessen ist, daß der entriegelte Tragarm mit dem Laufrad im ausgehobenen Zustand der Heuwerbungsmaschine durch die Feder in eine Gleichgewichts-Mittelstellung zwischen einer unteren Raststellung und einer oberen Raststellung gehalten wird, wobei am Tragarm eine Lochplatte angeordnet ist, die mehrere Bohrungen aufweist, in die ein federbelasteter an der Rechradachse axial verschiebbar gelagerter Rastbolzen eingreift. Zur Höhenverstellung muß die ganze Heuwerbungsmaschine durch Anheben des Schlepper-Dreipunktgestänges in die Transportstellung gebracht werden, wonach durch Ziehen am Rastbolzen das Laufrad selbsttätig in eine Mittelstellung springt, von der es manuell, in die obere oder die untere Raststellung gebracht werden muß. Zwar sind hierbei die Verstellelemente durch das Anheben leicht zugänglich, jedoch ist der gesamte Vorgang der Höhenverstellung noch zeitraubend.

Aufgabe der vorliegenden Erfindung ist es eine Heuwerbungsmaschine der eingangs erwähnten Art derart auszugestalten, daß ihre Laufräder einfach und mit geringstem Kraftaufwand in kürzest möglicher Zeit in der Höhe verstellt werden können.

Erfindungsgemäß wird zur Lösung dieser Aufgabe vorgeschlagen, daß in die Öffnung ein Exzenter eingreift, der drehbar am Lagerflansch befestigt ist, und daß eine Einrichtung zum stufenlosen Verdrehen des Exzenters und zum Feststellen des Exzenters in der eingestellten Höhenposition des Laufrades vorgesehen ist.

Vorzugsweise weist der Exzenter eine mit einem Gewinde versehene Öffnung auf, die von einem Gewindebolzen mit Kopf durchsetzt ist, der mittels einer Haltemutter am Lagerflansch zum Festhalten des Exzenters befestigt ist.

Die Drehrichtung der Gewinde ist vorteilhafterweise so gewählt, daß beim Hochschwenken der Maschine der Kopf des Gewindebolzens auf den Exzenter gepreßt wird.

Mit der erfindungsgemäßen Ausgestaltung der Heuwerbungsmaschine wird der Vorteil erzielt, daß die Höhenverstellung des Laufrades besonders einfach und schnell erfolgen kann. Die Anordnung zur Höhenverstellung ist besonders billig herstellbar und dient gleichzeitig zur Festlegung des Tragarms am Rechradkörper. Die Laufradstellung wird zwischen beiden Maximalwerten stufenlos eingestellt, wobei durch die gleichzeitige Befestigung des Tragarms am Lagerflansch eine besonders einfache Montage von Laufrad und Verstelleinrichtung ermöglicht wird. Die Höhenverstellung erfolgt ausschließlich mittels eines Schraubenschlüssels, mit dem der Sechskantkopf des Gewindebolzens verdreht wird.

Im folgenden wird die Erfindung anhand der Zeichnung näher erläutert, in der ein vorteilhaftes Ausführungsbeispiel dargestellt ist. Es zeigen:

Figur 1 eine Seitenansicht einer erfindungsgemäß ausgestalteten Heuwerbungsmaschine und

Figur 2 einen Schnitt entlang der Linie A-A von Figur 1.

In den Figuren ist eine Heuwerbungsmaschine dargestellt, die mit dem Dreipunktgestänge eines nicht dargestellten Schleppers verbunden ist. Die Heuwerbungsmaschine weist einen Rechkörper 1 auf, der an einem Querträger 2 angeordnet ist. Der Rechkörper 1 ist mit mindestens zwei Armen 8, 9 versehen, an denen Zinken 10, 11 befestigt sind. Mit 13 ist eine Handkurbel bezeichnet, die bei 14 an einem Längsträger gelagert ist und mit der eine entsprechende Einstellung der Werkzeugarme 8, 9 erfolgen kann.

Der Rechkörper 1 stützt sich über ein Laufrad 3 auf den Boden ab. Um eine einfache und schnelle Höhenverstellung dieses Laufrades bezüglich des Rechkörpers 1 zu erzielen, ist das Laufrad 3 über einen Tragarm 5 mit einem Schwenkhebel 6 fest verbunden, der wiederum an einem Lagerflansch 7 des Rechkörpers 1 angeordnet ist.

Der Tragarm 5 ist dabei an einem Ende des Schwenkhebels 6 z.B. mit diesem verschweißt, während das andere Ende des Schwenkhebels 6 eine Öffnung 15 aufweist, in die ein Exzenter 16 eingreift.

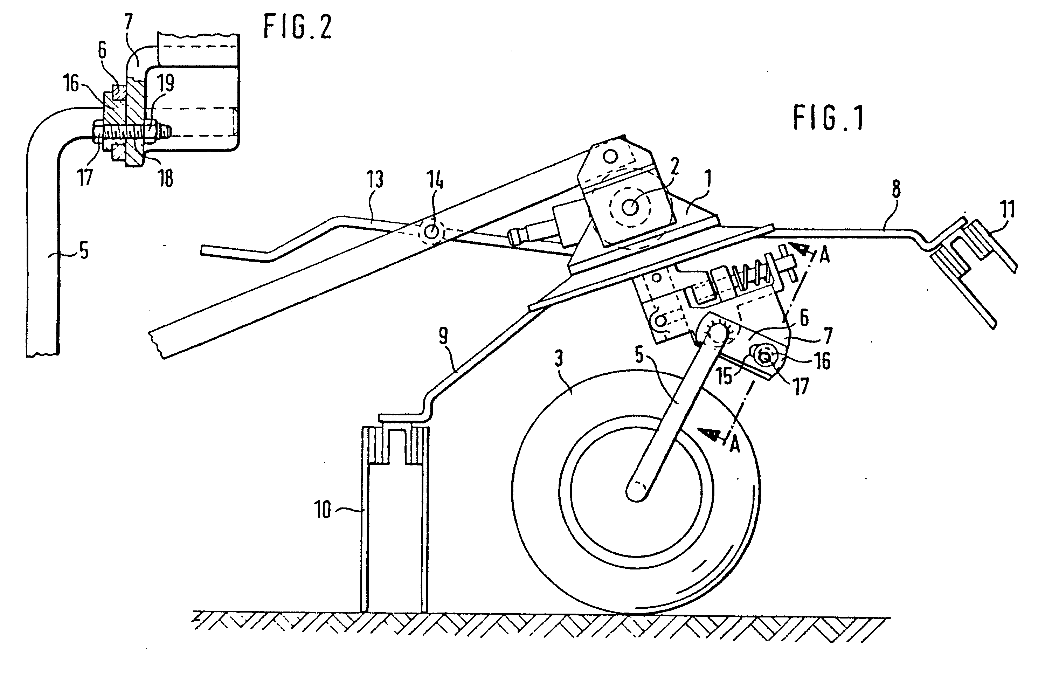

Wie insbesondere Figur 2 erkennen läßt, weist der Exzenter 16 eine nicht mittig angeordnete Öffnung auf, die mit einem Innengewinde versehen ist und in die ein Gewindebolzen 18 eingreift, dessen Außengewinde dem Innengewinde des Exzenters 16 entspricht. Der Gewindebolzen 18 durchsetzt eine Öffnung im Lagerflansch 7 und wird durch eine Haltemutter 19 gehalten. Ferner weist der Gewindebolzen 18 einen Kopf 17 in Form eines Sechskants auf.

Da das Gewinde des Gewindebolzens 18 bis zum Kopf 17 reicht und an das Innengewinde der Öffnung im Exzenter 16 angepaßt ist, ist es möglich, nach lösen der Halteschraube 19 die Höheneinstellung des Tragarms 5 durch einfaches Verdrehen des als Sechskant ausgebildeten Kopfes 17 des Gewindebolzens 18 vorzunehmen. Die Drehrichtung des Exzenters ist dabei so gewählt, daß beim Hochschwenken der Maschine mittels des Exzenters 16 der Kopf 17 des Gewindebolzens 18 auf den Exzenter 16 gepreßt wird. Es ist also keine weitere feste Verbindung zwischen Lagerflansch und Tragarm erforderlich.

**Patentansprüche**

1. Heuwerbungsmaschine zum Zetten und Schwaden von geschnittenem Erntegut, die mindestens einen an einem Querträger (2) angeordneten, um eine Drehachse antreibbaren Rechkörper (1) aufweist, an dessen Unterseite ein Laufrad (3) angeordnet ist, über das er sich am Boden abstützt, wobei das Laufrad (3) über einen Tragarm (5) und einen Schwenkhebel (6) höhenverstellbar mit einem Lagerflansch (7) des Rechkörpers (1) verbunden ist, wobei der Schwenkhebel (6) mit einem Ende mit dem Tragarm (5) fest verbunden ist und an seinem anderen Ende eine Öffnung (15) aufweist, **dadurch gekennzeichnet**, daß in die Öffnung (15) ein Exzenter (16) eingreift, der drehbar am Lagerflansch (7) befestigt ist, und daß eine Einrichtung (17, 18, 19) zum stufenlosen Verdrehen des Exzenters (16) und zum Feststellen des Exzenters (16) in der eingestellten Höhenposition des Laufrades (3) vorgesehen ist.

2. Heuwerbungsmaschine nach Anspruch 1, **dadurch gekennzeichnet**, daß die Einrichtung zum Feststellen des Exzenters (16) eine im Exzenter (16) vorgesehene, mit einem Gewinde versehene Öffnung aufweist, die von einem Gewindebolzen (18) mit Kopf (17) durchsetzt ist, der mittels einer Haltemutter (19) am Lagerflansch (7) zum Feststellen des Exzenters (16) befestigt ist.

3. Heuwerbungsmaschine nach Anspruch 2, **dadurch gekennzeichnet**, daß die Drehrichtung der Gewinde so gewählt ist, daß beim Hochschwenken der Maschine der Kopf (17) des Gewindebolzens (18) gegen den Exzenter (16) gepreßt wird.

**Claims**

1. A haymaking machine for tedding and swathing cut harvested material, having at least one rake member (1) disposed on a transverse carrier (2) and drivable around a rotational axis, and on whose underside there is disposed a groundwheel (3) by means of which it is supported on the ground, the groundwheel (3) being connected in a vertically-displaceable manner by a support arm (5) and a pivot lever (6) to a mounting flange (7) of the rake member (1), the pivot lever (6) being rigidly attached at one end to the support arm (5) and having at its other end an opening (15), characterised in that that there engages in the opening (15) an eccentric (16) which is rotatably attached to the bearing flange (7), and that there is provided a device (17, 18, 19) for infinitely-variable rotation of the eccentric (16) and for fixing the eccentric (16) in the set vertical position of the groundwheel (3).

2. A haymaking machine according to Claim 1, characterised in that the device for fixing the eccentric (16) has an opening provided in the eccentric (16) and provided with a thread, through which there passes a threaded bolt (18) with a head (17), which is secured on the mounting flange (7) by means of a retaining nut (19) in order to secure the eccentric (16).

**3.** A haymaking machine according to Claim 2, characterised in that the direction of rotation of the thread is such that, when the machine is pivoted upwards, the head (17) of the threaded bolt (18) is pressed against the eccentric (16).

**Revendications**

**1.** Machine de fenaison pour le fanage-épandage et l'andainage de produit de récolte coupé, qui comporte au moins un corps râteleur (1) monté sur une traverse (2) et pouvant être entraîné autour d'un axe de rotation et sur le côté de dessous duquel est disposée une roue de roulement porteuse (3) par l'intermédiaire de laquelle il s'appuie au sol, la roue de roulement porteuse (3) étant reliée de façon déplaçable en hauteur à une bride-console de support (7) du corps râteleur (1) par l'intermédiaire d'un bras-support (5) et d'un levier pivotant (6), le levier pivotant (6) étant fixement relié par une extrémité au bras-support (5) et présente un orifice (15) à son autre extrémité, caractérisée en ce que dans l'orifice (15) pénètre un excentrique (16) qui est fixé de façon tournante à la bride-console de support (7) et en ce qu'est prévu un dispositif (17, 18, 19) pour le déplacement rotatif continu de l'excentrique (16) et pour l'immobilisation de l'excentrique (16) dans la position en hauteur réglée de la roue de roulement porteuse (3).

**2.** Machine de fenaison selon la revendication 1, caractérisée en ce que le dispositif pour l'immobilisation de l'excentrique (16) comporte un orifice prévu dans l'excentrique (16) et pourvu d'un filetage et qui est traversé par un boulon fileté (18) à tête (17) qui est fixé au moyen d'un écrou de retenue (19) à la bride-console de support (7) pour l'immobilisation de l'excentrique (16).

**3.** Machine de fenaison selon la revendication 2, caractérisée en ce que le sens de rotation du filetage est choisi de telle façon que, lors du pivotement de la machine vers le haut, la tête (17) du boulon fileté (18) soit pressée contre l'excentrique (16).

FIG.2

FIG.1

EP 0 223 950 B1